Europäisches Patentamt

European Patent Office

Office européen des brevets

(19)

(11) Numéro de publication : **0 220 101**
**B1**

(12)
# FASCICULE DE BREVET EUROPÉEN

(45) Date de publication du fascicule du brevet :
03.01.90

(51) Int. Cl.⁵ : **G 06 K 19/04**, B 07 C 3/00,
B 61 B 10/00

(21) Numéro de dépôt : **86402134.0**

(22) Date de dépôt : **30.09.86**

(54) **Dispositif de codage et de lecture pour des organes porteurs de pièces à diriger vers des postes de travail déterminés.**

(30) Priorité : 01.10.85 FR 8514514

(43) Date de publication de la demande :
29.04.87 Bulletin 87/18

(45) Mention de la délivrance du brevet :
03.01.90 Bulletin 90/01

(84) Etats contractants désignés :
AT BE CH DE GB IT LI LU NL SE

(56) Documents cités :
CH-A- 512 786
GB-A- 2 062 917
IBM TECHNICAL DISCLOSURE BULLETIN, vol. 8, no.
1, juin 1965, pages 159-160, New York, US; H.J.
KISTNER: "Disk-shaped unit record"

(73) Titulaire : JICE AUTOMATION
Zone Industrielle Pierre Brune
F-85110 Chantonnay (FR)

(72) Inventeur : Cousseau, Joseph
Avenue du 25 Août
F-79140 Cerizay (FR)

(74) Mandataire : Chevallier, Robert Marie Georges et al
Cabinet BOETTCHER 23, rue La Boétie
F-75008 Paris (FR)

## Description

L'invention a pour objet un dispositif utilisable pour affecter un signe ou un numéro codé d'identification à un organe déplaçable, servant généralement à porter des pièces à travailler, et pour permettre la lecture de ce signe ou numéro d'identification à un poste de lecture convenablement équipé à cet effet afin de permettre de diriger ensuite ledit organe déplaçable vers un endroit déterminé, par exemple, un poste de travail.

On connait déjà dans la littérature technique et dans la pratique, de nombreux dispositifs de codage et de lecture.

Le dispositif de l'invention cherche à s'en distinguer par sa simplicité de réalisation, par son faible coût d'exécution et d'exploitation procurant cependant une sûreté de fonctionnement remarquable.

Un dispositif conforme à l'invention comprend d'une part sur l'organe déplaçable un disque conçu pour être monté libre en rotation autour d'un axe, un axe supporté par l'organe déplaçable et portant ce disque, ce dernier présentant au moins sur une de ses faces principales une première plage d'entraînement en rotation, annulaire, concentrique à l'axe, où se trouvent des stries substantiellement radiales dans l'ensemble, et plusieurs autres plages annulaires de codage et de lecture de diamètres différents concentriques à l'axe, sur lesquelles sont prévus des points détectables. D'autre part, à chaque poste de lecture une buse de soufflage d'un gaz sous pression est disposée pour envoyer un jet de gaz dans une direction transversale aux stries de la première plage du disque de chaque organe arrêté à ce poste et au moins une branche de lecture est supportée pour être disposée radialement dans l'ensemble en regard des plages de codage et de lecture de ce même disque, cette branche portant des détecteurs appropriés en correspondance avec chacune des plages de codage et de lecture du disque ; de façon connue en soi, ces détecteurs sont reliés fonctionnellement à des circuits électroniques de décodage.

Selon un mode de réalisation de l'invention, il existe à chaque poste de lecture un étrier à deux branches parallèles et espacées pour pouvoir contenir librement entre elles un disque ; l'une des branches porte des émetteurs de rayonnement, de préférence en infrarouge et l'autre branche porte des phototransistors qui font partie des circuits électroniques de décodage ; de préférence, il existe trois plages de codage et de lecture ; une plage présente un trou pour l'émission d'un bit de démarrage de lecture, une plage présente une succession de trous pour l'émission de bits d'horloge et une autre plage du disque présente une succession de trous de codage.

Dans un exemple particulièrement avantageux de réalisation de l'invention, dans une installation où il existe au moins un vérin pneumatique ayant à exécuter un mouvement au moment de l'opération de lecture du disque de chaque organe déplaçable, la buse de soufflage est raccordée à l'orifice d'échappement de l'air de ce vérin.

On donnera maintenant, sans intention limitative et sans exclure aucune variante, une description d'un exemple préféré de réalisation. On se reportera aux dessins annexés dans lesquels :

la figure 1 est une vue de côté d'un poste de lecture avec un disque d'un organe déplaçable en cours de lecture ;

la figure 2 est une vue en perspective du même poste de lecture ;

la figure 3 est une vue générale d'une installation qui comprend un poste de lecture comme celui des figures 1 et 2 et un ensemble d'organes déplaçables munis chacun d'un disque de codage.

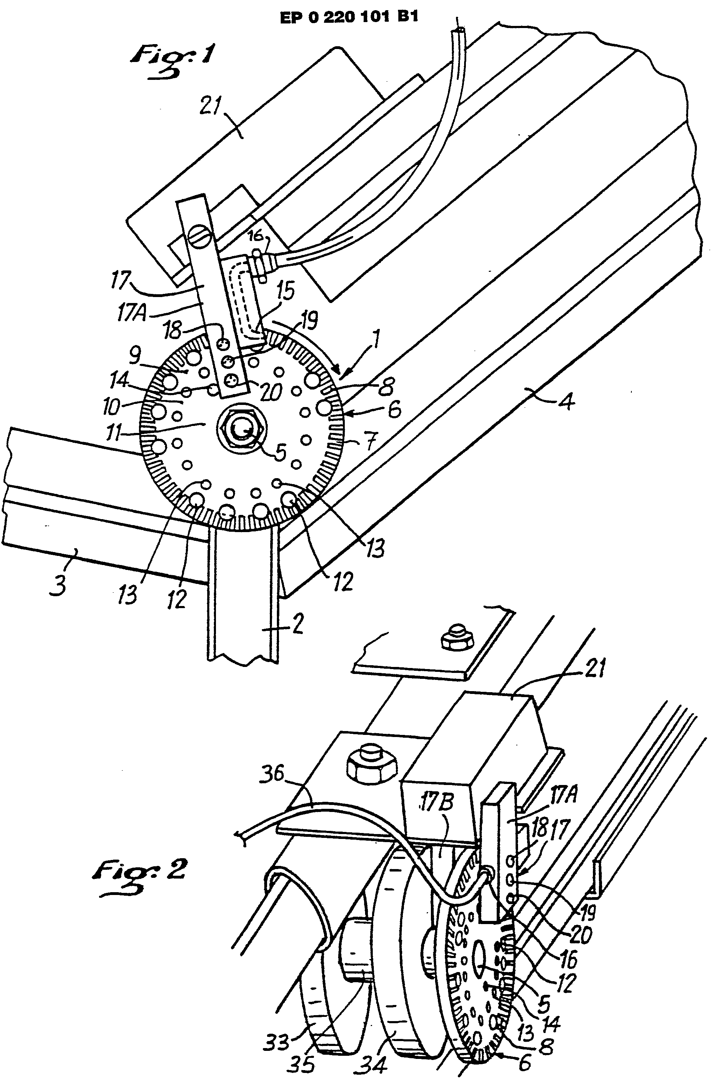

La figure 1 montre un poste de lecture pour des organes déplaçables 1 équipés chacun d'une tige de suspension 2 à laquelle sont suspendues, par exemple, des pièces pour la confection de vêtements. A ce poste de lecture, chaque organe déplaçable 1 vient prendre une position précise définie dans cet exemple par un angle prévu entre un rail de guidage 3 faiblement descendant et un rail de guidage 4 fortement montant.

Chaque organe déplaçable 1 a un axe 5 sur lequel est monté libre en rotation un disque 6. Ce dernier présente sur une de ses faces principales une première plage annulaire 7, concentrique à l'axe 5, située de préférence à la périphérie pour avoir le diamètre le plus grand possible. Dans cette plage, sont réalisées des stries ou rainures radiales 8. Ensuite, plus près de l'axe 5, il existe trois plages annulaires successives, respectivement 9, 10, 11, concentriques, de diamètres successivement réduits, pour le codage et la lecture. La plage 9 qui suit directement la première plage 7 présente une succession de trous traversants 12 dont le nombre et les espacements sont représentatifs d'un numéro d'identification. La plage suivante 10, plus proche de l'axe 5, présente une succession de trous traversants 13 espacés d'un pas constant en correspondance avec une cadence de lecture ou un rythme d'horloge. Les trous 12 de la plage 9 sont sur une même ligne radiale respectivement qu'une ligne radiale correspondante d'un trou 13 de la plage 10. La plage 11, la plus proche de l'axe 5, présente un seul trou traversant 14 situé sur une même ligne radiale qu'un trou 13 de la plage 10, sur laquelle peut se trouver éventuellement un trou 12 de la plage 9. Le trou 13 de la plage 10 correspond à l'émission d'un signal de démarrage de l'opération de lecture pendant la rotation du disque 6 autour de l'axe 5.

Au poste de lecture sont installées, de manière fixe et permanente, une buse 15, qui est raccordée par un embout 16 à une source d'air comprimé, et une chape 17 à deux branches 17A, 17B qui contiennent entre elles chaque disque 6 situé au poste de lecture.

La buse 15 est orientée pour souffler de l'air dans une direction transversale aux stries radiales 8 et presque tangentielle à la surface du disque 6 afin de faire tourner ce dernier autour de l'axe 5. Le réglage, à l'aide d'une vis non représentée, du débit d'air soufflé à travers la buse 15, permet d'obtenir une vitesse de rotation substantiellement constante de tous les disques 5 à une valeur convenable pour la lecture.

Une branche 17A de la chape 17 située sur un côté des disques 6, porte des détecteurs, disposés radialement en direction de l'axe 5, constitués par des phototransistors respectivement 18, 19, 20, en correspondance chacun avec une plage 9, 10, 11 de trous. Ces phototransistors sont reliés à des circuits électroniques (non représentés) connus en soi, inclus dans un appareil de décodage 21.

La branche opposée 17B de la chape 17 située sur l'autre côté des disques 6 porte des émetteurs de rayonnement infrarouge (non visibles sur les dessins), disposés radialement en direction de l'axe 5, en correspondance chacun avec les phototransistors 18, 19, 20. Ces derniers sont impressionnés par le rayonnement des émetteurs chaque fois qu'un trou du disque 6 permet le passage du rayonnement.

Il est évident que l'on pourrait choisir d'autres genres de détecteurs et d'autres moyens d'agir sur eux à l'aide des disques 5. Par exemple, chaque disque 5 pourrait être pourvu sur les plages 9, 10, 11, de codage et de lecture de plots magnétiques et les détecteurs de la branche 17A pourraient être des têtes sensibles au passage des plots magnétiques. La solution décrite ici est donc préférable mais non obligatoire.

La buse 15 pourrait être installée sur une branche d'une chape analogue à la chape 17 ayant une deuxième branche située en regard de l'autre face principale des disques 6. Cette deuxième branche pourrait porter une deuxième buse de soufflage d'air comprimé sur des stries radiales réalisées sur cette autre face principale des disques.

Le fonctionnement du dispositif de l'invention est le suivant.

Chaque disque 6 de chaque organe déplaçable 1 est pourvu dans sa plage 9 de trous 12 dont le nombre et les espacements lui sont particuliers et permettent de l'identifier.

Quand un organe déplaçable 1 est arrêté au poste de lecture, de l'air comprimé envoyé à la buse ou aux buses de soufflage 15 provoque la rotation du disque 6. Le trou 14 de la plage 11 permet au cours d'un tour du disque 6 l'envoi, par le détecteur 20 correspondant influencé par le rayonnement de l'émetteur qui lui est associé, d'un signal du début de lecture. La lecture se fait à travers les trous d'identification 12 de la plage 9 quand le détecteur 18 correspondant est influencé par le rayonnement de l'émetteur qui lui est associé. Les trous 13 de la plage 10 provoquent l'émission de signaux d'horloge qui permettent de connaître la vitesse exacte de rotation du disque 6. Ce dernier est réalisable en matière plastique ; les trous 12 du codage d'identification correspondent de préférence à un code binaire de 16 bits. La lecture est répétée sur plusieurs tours successifs, six par exemple, du disque 6, pendant une durée totale de quatre secondes par exemple. Quand l'organe déplaçable 1 arrêté au poste de lecture a été identifié, il est dirigé ensuite vers le poste de travail suivant où il doit s'arrêter.

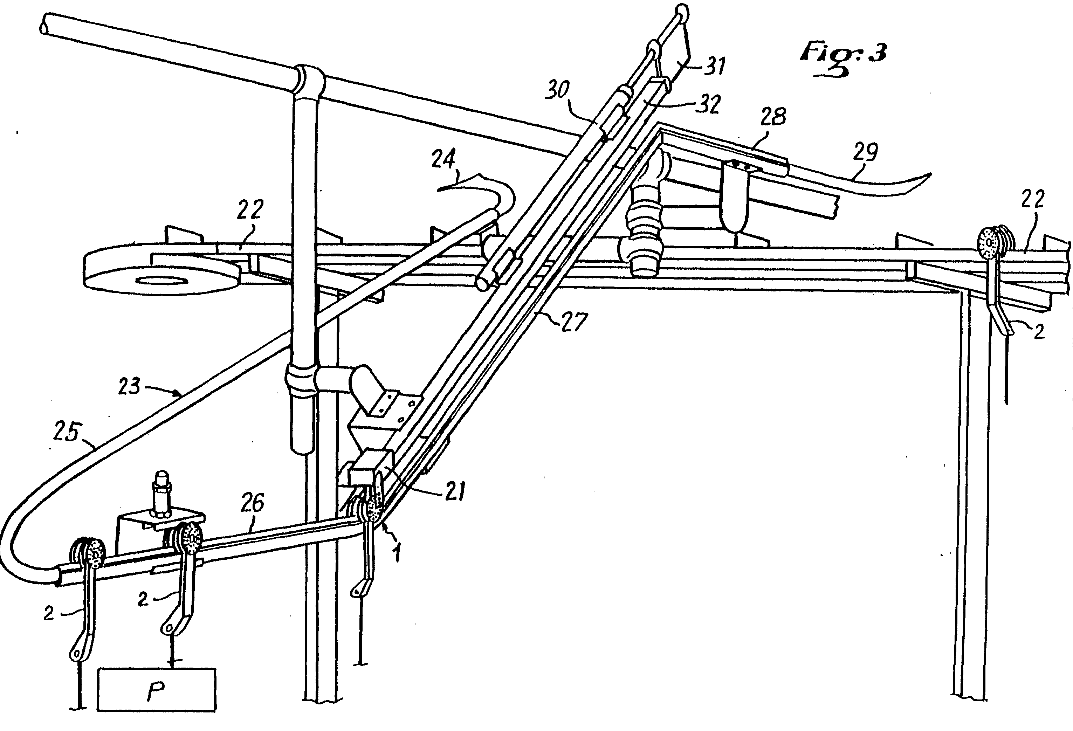

La figure 3 montre un exemple d'utilisation du dispositif de l'invention que l'on vient de décrire.

Des organes déplaçables 1 sont déplacés sur un transporteur général 22 le long duquel sont installés plusieurs postes de travail P. Chaque poste de travail P est associé à une ligne de dérivation 23 qui comprend successivement une lame d'aiguillage d'entrée 24, un chemin de guidage descendant 25, un tronçon 26 d'arrêt au poste de travail P faiblement incliné sur l'horizontale, un chemin de guidage de remontée 27, un chemin de guidage descendant 28, une lame d'aiguillage 29 de réintroduction sur le transporteur général 22. Le poste de lecture est situé au coude fait par le tronçon d'arrêt 26 et le chemin de guidage de remontée 27. La remontée des organes déplaçables est exécutée, après lecture d'identification comme expliqué ci-dessus, à l'aide d'un vérin pneumatique 30, représenté partiellement, qui commande un dispositif de remontée 31 inclus dans un fourreau 32. Ce dispositif ne sera pas décrit en détail parce qu'il ne fait pas partie de la présente invention. Toutefois, en rapport avec la présente invention, on peut voir sur la figure 2 que sur chaque organe déplaçable 1, l'axe 5 qui porte le disque 6 est aussi l'axe de deux roulettes 33, 34 séparées par un intervalle 35. Le dispositif de remontée comprend une butée escamotable pendant la descente qui vient se placer dans l'intervalle 35 pour entraîner l'organe déplaçable 1 vers le haut pendant la remontée. Le vérin 30 fait descendre le dispositif de remontée 31 quand un organe déplaçable 1 est arrêté au poste de lecture. Le côté de l'échappement du vérin 30 pendant la descente du dispositif de remontée a un orifice d'échappement de l'air qui est raccordé par un tuyau souple 36 à l'embout 16 de raccordement de la buse de soufflage. Ainsi, aucune source d'énergie supplémentaire n'est nécessaire pour l'exécution de l'opération de lecture.

Bien entendu, tout autre vérin d'une installation dont le mouvement a lieu au moment où doit être faite une lecture, pourrait être raccordé par son orifice d'échappement à la buse ou aux buses de soufflage 15. Toutefois, l'emploi d'un vérin destiné à évacuer du poste de lecture les organes déplaçables 1 est particulièrement approprié puisque ce vérin entre en fonctionnement justement au moment d'une lecture d'identification.

**Revendications**

1. Dispositif de codage et de lecture pour des organes déplaçables porteurs de pièces et s'arrêtant pendant leur déplacement à un poste de lecture, caractérisé en ce qu'il comprend :

d'une part sur chaque organe déplaçable (1), un axe (5), un disque (6) monté libre en rotation sur cet axe (5) et ayant au moins sur une de ses faces principales une première plage annulaire d'entraînement en rotation (7) dans laquelle sont réalisées des stries (8) radiales par rapport audit axe (5), plusieurs plages annulaires de codage et de lecture (9, 10, 11), à diamètres différents, sur lesquelles sont prévus des points détectables (12, 13, 14) ;

d'autre part, au poste de lecture, au moins une buse de soufflage d'un gaz sous pression (15) disposée pour envoyer un jet de gaz dans une direction transversale aux stries (8) de la première plage du disque (6) dans un sens de rotation de ce dernier, d'un organe déplaçable (1) arrêté à ce poste de lecture, au moins une branche de lecture (17A) supportée pour être disposée radialement dans l'ensemble en regard des plages de codage et de lecture (9, 10, 11) de ce même disque (6), cette branche (17A) portant en correspondance avec lesdites plages (9, 10, 11) des détecteurs appropriés (18, 19, 20) reliés fonctionnellement à des circuits électroniques de décodage.

2. Dispositif selon la revendication 1, caractérisé en ce que chaque disque (6) présente trois plages annulaires concentriques de codage et de lecture, dans lesquelles une plage (11) porte un seul point détectable pour l'émission d'un signal de démarrage de lecture, une plage (10) porte une succession de points détectables pour l'émission de signaux d'horloge, une plage (9) porte une succession de points détectables de codage d'identification.

3. Dispositif selon la revendication 1, caractérisé en ce que les points détectables sont constitués par des trous (12, 13, 14) percés à travers le disque (6), les détecteurs de la branche de lecture (17A) sont constitués par des phototransistors (18, 19, 20) montés sur cette branche (17A) pour se trouver en regard desdites plages de codage et de lecture (9, 10, 11), sur un côté du disque (6) cependant qu'il existe sur l'autre côté de ce disque (6) une branche opposée (17B) qui porte des émetteurs de rayonnement apte à impressionner les phototransistors (18, 19, 20) à travers lesdits trous (12, 13, 14).

4. Dispositif selon la revendication 1, caractérisé en ce que chaque disque (6) est pourvu de stries radiales (8) sur chacune de ses deux faces principales opposées et il existe deux buses de soufflage d'air sous pression (15) se trouvant de part et d'autre de chaque disque (6) de chaque organe déplaçable (1) arrêté à un poste de lecture.

5. Dispositif selon la revendication 1, caractérisé en ce qu'il comprend une source d'air sous pression reliée à la buse de soufflage (15) et constituée par le côté échappement d'un vérin pneumatique (30).

6. Dispositif selon la revendication 5, caractérisé en ce que le vérin pneumatique (30) est un vérin d'évacuation des organes déplaçables (1) du poste de lecture où ces derniers sont arrêtés pour une lecture d'identification.

## Claims

1. A coding and reading device for displaceable members for carrying pieces, which stop during their displacement at a reading station, characterised in that it comprises :

on the one hand on each displaceable member (1), a shaft (5), a disc (6) which is mounted freely rotatably on said shaft (5) and which has at least on one of its main faces a first annular rotational drive area (7) in which there are provided grooves (8) which are radial with respect to said shaft (5), and a plurality of annular coding and reading areas (9, 10, 11) of different diameters, on which there are provided detectable points (12, 13, 14) ; and

on the other hand, at the reading station, at least one nozzle (15) for blowing a gas under pressure, the nozzle being disposed to direct a jet of gas in a direction transverse with respect to the grooves (8) of the first area of the disc (6) in a direction of rotation of the latter, of a displaceable member (1) which is stopped at said reading station, and at least one reading arm (17A) which is supported to be disposed radially generally facing the coding and reading areas (9, 10, 11) of the same disc (6), said arm (17A), in a position corresponding to said areas (9, 10, 11), carrying suitable detectors (18, 19, 20) functionally connected to electronic decoding circuits.

2. A device according to claim 1 characterised in that each disc (6) has three annular concentric coding and reading areas in which an area (11) carries a single detectable point for the emission of a reading starting signal, an area (10) carries a succession of detectable points for the emission of clock signals, and an area (9) carries a succession of detectable identification coding points.

3. A device according to claim 1 characterised in that the detectable points are formed by holes (12, 13, 14) through the disc (6), and the detectors of the reading arm (17A) are formed by phototransistors (18, 19, 20) mounted on said arm (17A) to be disposed facing said coding and reading areas (9, 10, 11) on one side of the disc (6) while on the other side of the disc (6) there is an opposite arm (17B) which carries means emitting radiation capable of acting upon the phototransistors (18, 19, 20) through said holes (12, 13, 14).

4. A device according to claim 1 characterised in that each disc (6) is provided with radial grooves (8) on each of its two opposite main faces and there are two pressure air blowing nozzles (15) disposed on respective sides of each disc (6) of each displaceable member (1) which is stopped at a reading station.

5. A device according to claim 1 characterised in that it comprises a source of air under pressure connected to the blowing nozzles (15) and formed by the exhaust side of a pneumatic jack (30).

6. A device according to claim 5 characterised in that the pneumatic jack (30) is a jack for removal of the displaceable members (1) from the reading station in which the latter are stopped for an identification reading operation.

**Patentansprüche**

1. Kodier- und Abtastvorrichtung für bewegbare Werkstück-Trägerorgane, die während ihrer Bewegung an einer Abtaststation angehalten werden, dadurch gekennzeichnet, daß sie umfaßt:

einerseits an jedem beweglichen Organ (1) eine Achse (5), eine auf dieser Achse (5) frei drehbar gelagerte Scheibe (6) mit einem auf wenigstens einer ihrer Hauptflächen vorgesehenen, einem Rotationsantrieb dienenden, ersten Ringbereich (7), in dem bezüglich der Achse (5) radial verlaufende Rillen (8) ausgebildet sind, und mehrere, unterschiedliche Durchmesser aufweisende Kodier- und Abtastringbereiche (9, 10, 11), auf denen abtastbare Stellen (12, 13, 14) vorgesehen sind; und

andererseits an der Abtaststation wenigstens eine Blasdüse (15) für ein unter Druck stehendes Gas, die so angeordnet ist, daß sie einen Gasstrahl in Richtung quer zu den Rillen (8) des ersten Bereiches der Scheibe (6) eines an dieser Abtaststation angehaltenen, beweglichen Organs (1) und in Drehrichtung der Scheibe entsendet, und wenigstens einen Abtastschenkel (17A), der so gehalten ist, daß er zu der Gesamtheit der Kodier- und Abtastbereiche (9, 10, 11) dieser Scheibe (6) radial und diesen gegenüberliegend verläuft, wobei dieser Schenkel (17A) in Zuordnung zu den Bereichen (9, 10, 11) geeignete Detektoren (18, 19, 20) trägt, die funktionell mit elektronischen Dekodierkreisen verbunden sind.

2. Vorrichtung nach Anspruch 1, dadurch gekennzeichnet, daß jede Scheibe (6) drei konzentrische Kodier- und Abtastringbereiche aufweist, von denen ein Bereich (11) eine einzige abtastbare Stelle für die Emission eines Startsignals für die Abtastung trägt, ein Bereich (10) eine Aufeinanderfolge abtastbarer Stellen für die Emission von Taktsignalen trägt, und ein Bereich (9) eine Aufeinanderfolge abtastbarer Stellen für eine Identifizierungskodierung trägt.

3. Vorrichtung nach Anspruch 1, dadurch gekennzeichnet, daß die abtastbaren Stellen von Löchern (12, 13, 14) gebildet sind, welche durch die Scheibe (6) durchgehen, daß die Detektoren des Abtastschenkels (17A) von an diesem Schenkel (17A) befestigten Phototransistoren (18, 19, 20) gebildet sind, die sich auf einer Seite der Scheibe (6) den Kodier- und Abtastbereichen (9, 10, 11) gegenüber befinden, und daß jedoch auf der anderen Seite der Scheibe (6) ein gegenüberliegender Schenkel (17B) vorliegt, der Strahlensender trägt, welche ihrerseits befähigt sind, die Phototransistoren (18, 19, 20) durch die Löcher (12, 13, 14) hindurch zu beeinflussen.

4. Vorrichtung nach Anspruch 1, dadurch gekennzeichnet, daß jede Scheibe (6) auf jeder ihrer beiden einander gegenüberliegenden Hauptflächen mit radialen Rillen (8) versehen ist, und daß zwei Blasdüsen (15) für Druckluft vorgesehen sind, die sich jeweils auf der einen und anderen Seite jeder Scheibe (6) jedes an einer Abtaststation angehaltenen, beweglichen Organs (1) befinden.

5. Vorrichtung nach Anspruch 1, dadurch gekennzeichnet, daß sie eine Druckluftquelle umfaßt, die mit der Blasdüse 15 verbunden ist und von der Austrittsseite eines pneumatischen Arbeitskolbens (30) gebildet ist.

6. Vorrichtung nach Anspruch 5, dadurch gekennzeichnet, daß der pneumatische Arbeitskolben (30) dazu dient, die beweglichen Organe (1) von der Abtaststation, an welcher die letzteren hzum Zwecke einer Identifizierungsabtastung angehalten werden, wegzuführen.

EP 0 220 101 B1

Fig:1

Fig:2

*Fig.3*

EP 0 220 101 B1